# EUROPEAN PATENT SPECIFICATION

(11) **EP 0 445 810 B1**
(45) Date of publication and mention of the grant of the patent: **21.02.1996**
(21) Application number: 91103495.7
(22) Date of filing: 07.03.1991
(51) Int. Cl.: D01F 6/80, A01K 91/18

(54) **Polyamide monofilament**
Polyamid-Monofilament
Monofilament de polyamide

(30) Priority: 08.03.1990 JP 57510/90
(43) Date of publication of application: 11.09.1991
(73) Proprietor: Mitsubishi Chemical Corporation, Chiyoda-ku Tokyo (JP)
(72) Inventor: Seiichiro, Maruyama, Mitsubishi Kasei Corporation, Enzo, Chigasaki-shi, Kanagawa-ken (JP); Tsunoda, Masami, Mitsubishi Kasei Corporation, Enzo, Chigasaki-shi, Kanagawa-ken (JP)
(74) Representative: Wächtershäuser, Günter, Prof. Dr.

(56) References cited:
- EP-A- 0 002 431
- EP-A- 0 355 017
- FR-A- 2 407 227

## Description

The present invention relates to a monofilament made of a specific copolymer polyamide. More particularly, the present invention provides a polyamide monofilament excellent in the flexibility and transparency, which is useful particularly for a floating line system for fishery, especially for longline fishing.

Polyamides are excellent in the mechanical properties, heat resistance and cold resistance and thus are widely used for e.g. injection molded products represented by automobile parts, films or monofilaments.

One of the main uses of polyamide monofilaments, is use as thick monofilaments of at least 0.5 mm in diameter which are useful as materials for fishery. Such thick monofilaments are usually required to be readily bundled and easily knotted and to be flexible. Further, the transparency is required to be high so that they are hardly visible to fishes. Various kinds of copolymer polyamides have been used for such thick monofilaments. However, they have been inadequate in the flexibility and transparency. In order to improve the flexibility, it has been proposed to incorporate caprolactam which is a typical placticizer for polyamides (e.g. Japanese Unexamined Patent Publication No. 85315/1989). However, if the amount of caprolactam incorporated is small, no adequate effects will be obtained. Therefore, it is usual to incorporate it in an amount of about 10% by weight, but caprolactam is highly deliquescent and thus presents a serious problem from the practical viewpoint, since it must be maintained in a dry state when incorporated to polyamide pellets. Further, the melting point of caprolactam is low at a level of from 60 to 70°C, and it is likely to be melted by the heat of the extruder, whereby feeding into the extruder tends to be unstable. Furthermore, at a molding temperature of 250°C, it evaporates and produces fume vigorously, and its vapor is noxious to human bodies. Still further, there has been a problem that the addition of caprolactam in such a large amount at a level of 10% by weight tends to lower the strength of the thick monofilaments.

The present inventors have conducted extensive researches to overcome the above-mentioned problem in the practical operation for the production of thick monofilaments having caprolactam incorporated therein and to present thick monofilaments excellent in the flexibility and transparency. As a result, they have found that such objects can be accomplished by using a certain specific copolymer polyamide resin. The present invention has been accomplished on the basis of this discovery.

Thus, the present invention provides a stretched polyamide monofilament for fishing, which is made of a copolymer amide resin containing from 25 to 60 % by weight, based on the copolymer polyamide resin, of a dimerized fatty acid component as the copolymer component, and wherein the total stretching ratio is from 4 to 10 times.

Now, the present invention will be described in detail.

The copolymer polyamide resin to be used in the present invention comprises, as the main component, at least one polycondensation component for polyamide, such as a lactam of at least three-membered ring, a polymerizable ω-amino acid or a combination of a dibasic acids and a diamine. Specifically, such polycondensation components for polyamide include those derived from lactams such as ε-caprolactam, enantholactam, capryllactam, lauryllactam, α-pyrrolidone and α-piperidone, those derived from ω-amino acids such as 6-amino caproic acid, 7-amino heptanoic acid, 9-amino nonanoic acid and 11-amino undecanoic acid, and those obtained from a dibasic acid such as adipic acid, glutaric acid, pimelic acid, suberic acid, azelaic acid, sebacic acid, undecanedioic acid, dodecanedioic acid, hexadecanedioic acid, hexadecenedioic acid, eicosanedioic acid, eicosadienedioic acid, diglycolic acid, 2,2,4-trimethyladipic acid, xylylene dicarboxylic acid, 1,4-cyclohexane dicarboxylic acid, terephthalic acid or isophthalic acid and a diamine such as hexamethylenediamine, tetramethylenediamine, nonamethylenediamine, undecamethylenediamine, dodecamethylenediamine, 2,2,4- or 2,4,4-trimethylhexamethylenediamine, bis-(4,4'-aminocyclohexyl)methane or m-xylylenediamine. Among them, preferred is a polycondensation component composed of ε-caprolactam, or a polycondensation component obtained from hexamethylenediamine and adipic acid.

On the other hand, the dimerized fatty acid which constitutes the dimerized fatty acid component as the copolymer component, is a polymerized fatty acid obtained by polymerizing a fatty acid, such as a saturated, ethylenically unsaturated, acetylenically unsaturated, natural or synthetic monobasic fatty acid having from 8 to 24 carbon atoms, preferably from 12 to 24 carbon atoms. Among them, preferred is an ethylenically unsaturated fatty acid. Specifically, a dimer of linolenic acid, linolic acid, oleic acid or tall oil fatty acid may be mentioned.

Commercially available polymerized fatty acids usually contain dimerized fatty acids as the main components and further contain raw material monomer acids trimerized fatty acids. Among them, it is preferred to employ those having a dimerized fatty acid content of at least 60% by weight, preferably at least 70% by weight, more preferably at least 95% by weight. Further, the commercially available polymerized fatty acids may be distilled to increase the dimerized fatty acid content.

The content of the dimerized fatty acid in the polyamide resin is selected usually within a range of from 25 to 60% by weight, preferably from 30 to 55% by weight.

If the content of the dimerized fatty acid is less than 25% by weight, the flexibility and the transparency of the resulting copolymer polyamide resin tends to be inadequate. On the other hand, if it exceeds 60% by weight, polycondensation tends to be difficult, and the transparency tends to deteriorate.

There is no particular restriction as to the method for producing the copolymer polyamide resin of the present invention. However, it is preferred to employ a method wherein a prepolymer prepared from a dimerized fatty acid and a diamine is used and such a prepolymer is polycondensed with another polyamide raw material.

Here, as the dimerized fatty acid, the above-mentioned ethylenically unsaturated fatty acid is preferably employed. The diamine to be used for preparing the prepolymer together with the dimerized fatty acid, may be a diamine such as ethylenediamine, 1,4-diaminobutane, hexamethylenediamine, nonamethylenediamine, undecamethylenediamine, dodecamethylenediamine, 2,2,4- or 2,4,4-trimethylhexamethyelendiamine, bis-(4,4'-aminocyclohexyl)methane or methxylylenediamine.

To prepare the prepolymer from a dimerized fatty acid and a diamine, a common method for the preparation of a polyamide may be employed. For example, the dimerized fatty acid, the diamine and water are charged in a pressure container and heated to initiate the reaction, and the reaction is terminated when the number average molecular weight reaches a desired level.

The number average molecular weight of the prepolymer prepared from the dimerized fatty acid and the diamine is required to be within a range of from 1,000 to 50,000, preferably from 2,000 to 30,000, more preferably from 3,00 to 8,000, as a value obtained by quantitative analysis of the terminal groups. Here, the quantitative analysis of the terminal groups is a method wherein the amounts of amino groups and carboxyl groups as terminal groups of the polyamide are quantitatively analyzed to obtain the total amount of terminal groups, and the number average molecular weight is calculated from the total amount and the weight of the polymer. In the quantitative analysis of the terminal groups, the amount of amino groups is determined by dissolving the polyamide in phenol, followed by titration with 0.05N hydrochloric acid, and the amount of carboxyl groups is determined by dissolving the polyamide in benzyl alcohol, followed by titration with 0.1N sodium hydroxide. The total amount of terminal groups is the sum of the terminal amino groups and carboxyl groups thus obtained.

In the present invention, if the number average molecular weight is too low below the above range, the copolyamide tends to be hardly formed, and it tends to be difficult to obtain a product having adequate flexibility. On the other hand, if the number average molecular weight is too high above the above range, the copolyamide tends to undergo phase separation, and the molded product tends to be susceptible to peeling.

In a preferred method for producing the copolyamide of the present invention, the prepolymer prepared from a dimerized fatty acid and a diamine as described above, is poly-condensed with another polyamide raw material i.e. a material other than said prepolymer component. Here, another polyamide raw material is a raw material which constitutes the above-mentioned polycondensation component for polyamide as the main component of the copolyamide of the present invention. Namely, a lactam of at least three-membered ring, a polymerizable ω-amino acid, or a salt obtained by the reaction of a dibasic acid and a diamine, or its prepolymer, may be employed. As such raw material for polyamide, the compounds presented in the foregoing as the raw material for the polycondensation component for polyamide as the main component of the copolyamide of the present invention, may be employed. Specifically, a lactam such as ε-caprolactam, a ω-amino acid such as 6-amino caproic acid, or a salt of a dibasic acid such as adipic acid and a diamine such as hexamethylenediamine, may be mentioned.

When such raw material for polyamide is in the form a prepolymer, the number average molecular weight is usually at most 15,000, preferably at most 10,000. If this number average molecular weight is too high, the copolyamide tends to undergo phase separation.

To produce the copolyamide of the present invention, the prepolymer prepared from the dimerized fatty acid and the diamine, is charged into a polymerization reactor together with the raw material for polyamide other than said prepolymer component, and polymerization is conducted in accordance with a usual method for preparing a polyamide.

The number average molecular weight of the copolyamide of the present invention is usually from 15,000 to 40,000, preferably from 20,000 to 40,000. The copolyamide of the present invention is required only to contain the prescribed amount of the dimerized fatty acid component, and thus, there is no particular restriction as to the structure of the polymer. The structure may vary also depending upon the composition of the charge of the dimerized fatty acid. Namely, in one molecular chain, a plurality of prepolymer units formed by the dimerized fatty acid and the diamine may be introduced to form a block polymer, or a random polymer.

Further, in the present invention, instead of the combination of the dimerized fatty acid and the diamine, it is possible to employ a combination of the above-mentioned dibasic acid and a dimerized diamine obtainable from the above-mentioned dimerized fatty acid.

In the present invention, a small amount of one or more other polyamides may be added to the above-mentioned copolymer polyamide resin to such an extent not to impair the object of the present invention. Such other polyamides include, for example, nylon 6, nylon 66, nylon 6/66, nylon 11, nylon 12, nylon 6/6T and nylon 6I/6T.

Further, other resins such as an ionomer resin, an acid-modified polyethylene, an acrylate rubber, a polyester resin and a polyester elastomer, may also be incorporated. When such other resins are incorporated, the transparency usually tends to deteriorate to some extent, but they may be incorporated advantageously to improve the flexibility.

Further, various additives well known for thermoplastic resins, such as various stabilizers, reinforcing materials, pigments, dyestuffs, lubricants, ultraviolet absorbers, blocking-preventing agents or crystallizaticn accelerators, may be incorporated to the copolymer polyamide of the present invention. A plasticizer such as caprolactam or its oligomer may, of course, be incorporated.

Furthermore, if necessary, a bisamide compound of the following formula may also be incorporated to the copolymer polyamide of the present invention. The benzamide compound useful for this invention is a compound represented by the formula: 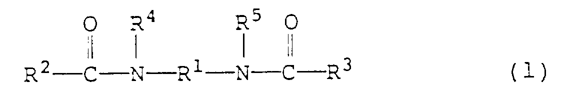 or 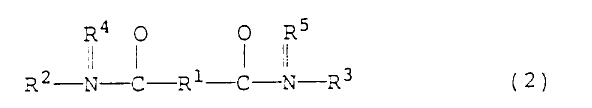 wherein R¹ is a bivalent hydrocarbon residue, each of R, and R³ is a monovalent hydrocarbon residue, and each of R⁴ and R⁵ is a hydrogen atom or a monovalent hydrocarbon residue.

The bisamide compound of the above formula (1) includes all of alkylene bisfatty acid amides, arylene bisfatty acid amides and arylene dialkylene bisfatty acid amides, which are obtainable by the reaction of diamines including alkylenediamines such as methylenediamine, ethylenediamine, propylenediamine, butylenediamine, hexamethylenediamine, octamethylenediamine and dodecamethylenediamine, arylenediamines such as phenylenediamine and naphthylenediamine and arylenedialkyldiamines such as xylylenediamine, with fatty acids such as stearic acid, hexanoic acid, octanoic acid, decanoic acid, lauric acid, myristic acid, palmitic acid, arachidic acid, behenic acid, oleic acid, elaidic acid and montanic acid. Preferred are, for example, N,N'-methylenebisstearic acid amide and N,N'-ethylenebisstearic acid amide.

The bisamide compound of the formula (2) includes all of those obtainable by the reaction of monoamines including alkylamines such as ethylamine, methylamine, butylamine, hexylamine, decylamine, pentadecylamine, octadecylamine and dodecylamine, arylamines such as aniline and naphthylamine, aralkylamines such as benzylamine and cycloalkylamines such as cyclohexylamine, with dicarboxylic acids such as terephthalic acid, p-phenylenedipropionic acid, succinic acid and adipic acid. Among them, a dioctadecyl dibasic acid amide such as N,N'-dioctadecyl terephthalic acid amide, may be mentioned as a typical example.

These bisamide compounds may be used alone or in combination as a mixture without any particular restriction to the types of the compounds of the formulas (1) and (2).

It is preferred to incorporate such bisamide, since a remarkable effect for improving the transparency can be thereby obtained when the cooling is conducted with water. The bisamide is incorporated preferably in an amount of from 0.1 to 0.5 parts by weight, more preferably from 0.15 to 0.4 part by weight, per 100 parts by weight of the polyamide. If the amount is excessive, there will be drawbacks such that white spots due to inadequate kneading tend to form in the monofilament, and it tends to be difficult to conduct spinning under a stabilized condition. On the other hand, if the amount is too small, the effect for improving the transparency and flexibility will be inadequate.

The monofilament of the present invention is made of the above described copolymer polyamide resin (or the copolymer polyamide resin composition having other resins, bisamide compounds, etc. incorporated as the case requires). It is preferably a monofilament having a diameter of at least 0.5 mm, more preferably 1-10 mm, most preferably 5-10 mm.

The monofilament made of the copolyamide of the present invention has transparency so high that can not be expected from monofilaments made of conventional polyamide materials for monofilaments.

It is difficult to measure the transparency of the monofilament by a usual measuring method for the transparency of fibers. In the present invention, "Optopower meter" made by Haktronics Co., Ltd. is employed for measuring the transparency of the monofilament.

The transparency of the monofilament of the present invention has a transmittance of at least -15 dBm (decibel), preferably at least -12 dBm, as measured by Optopower meter. The transparency of monofilaments usually decreases as the thickness increases. However, in the present invention, even a thick monofilament having a diameter of at least 5 mm, maintains high transparency at a level of -15 dBm.

Now, a preferred method for producing the polyamide monofilament of the present invention using the above-mentioned copolymer polyamide, will be described.

For the melt spinning, a usual method and usual conditions may be employed. Namely, by means of an extruder, the polyamide resin can be spun from nozzles within a temperature range higher by from 5 to 60°C than the melting point of the polyamide resin.

After the melt spinning, the formed monofilament is cooled with water of not higher than 25°C. If the cooling temperature is too high, the transparency tends to be poor, such being undesirable. The cooling temperature within a range of from 1 to 15°C is suitable for the transparency.

Then, a first stage stretching step is conducted. The temperature in this step is important as a production condition for accomplishing the object of the present invention i.e. for accomplishing both the transparency and the flexibility. The stretching temperature in this step is lower than the temperature used for stretching conventional polyamide monofilaments and is usually from 10 to 100°C, preferably from 30 to 80°C. If this temperature is too low, the product tends to have poor flexibility, and if it is too high, the transparency tends to be low.

As the medium to bring the filament to a constant temperature, any medium such as air, warm water or steam, may be employed. The stretching ratio at that time is preferably from 2.0 to 5.0 times. If the stretching ratio is too high or too low, the strength tends to be low, and it becomes difficult to conduct stretching under a stabilized condition. The length of the bath used for this stretching is usually from 0.5 to 2 m, preferably from 0.5 to 1 m.

The subsequent second stage stretching conditions and annealing conditions may be selected from the conditions for usual polyamide monofilaments within such ranges not to impair the transparency and the flexibility. The second stage stretching can be conducted in a heated air at a temperature within a range of from 150 to 350°C, preferably from 200 to 300°C at a stretching condition of from 1.1 to 3.0 times, and the annealing may be conducted in a heated air having a temperature within a range of from 150 to 350°C, preferably from 200 to 300°C under a relaxing condition of from 0.9 to 1.0 time.

In the present invention, stretching is conducted in each of the above steps. The total stretching ratio (i.e. the product of stretching rates of the respective steps) is from 4 to 10 times, preferably from 5 to 8 times, which is higher than the stretching ratio for usual polyamides. If the stretching ratio is too low, the transparency tends to be poor.

Thus, the polyamide monofilament obtained by the present invention has high transparency with a transmittance of at least -15 dBm as measured by Optopower meter, which has never been accomplished by conventional polyamide monofilaments, and it is a monofilament excellent also in the flexibility. (Here, the value of the light transmittance as measured by Optopower meter indicates that the larger the value i.e. the closer to 0, the better the transparency.)

Utilizing such a special characteristic, the monofilament of the present invention is suitable for use for a floating line system for fishery, particularly as a tuna long line for longline fishing. For example, it is useful as the main line, the branch line, the Sekiyama part and the lead part of the long line. It is particularly preferred to employ a thick monofilament as the main line. Namely, for this main line portion, it has been common to employ a twisted yarn to obtain a thick line. In the present invention, the monofilament itself can be made thick, and therefore the main line can be made of a single monofilament, whereby a simpler line system can be established.

Now, the present invention will be described in further detail with reference to Examples. However, it should be understood that the present invention is by no means restricted to such specific Examples.

### Production of a copolymer polyamide

Into a 200 ℓ autoclave, 25 kg of ε-caprolactam, 4.0 kg of water, 20 kg of a polymerized fatty acid composed essentially of a dimerized fatty acid (Empol 1010, manufactured by Henkel Co.) and 5.0 kg of a 80 wt% hexamethylenediamine aqueous solution were charged, and the autoclave was closed under a nitrogen atmosphere. The temperature and pressure were raised to 270°C and 14 kg/cm, respectively, and the reaction was conducted under pressure for 3 hours under stirring. Then, the pressure was gradually released to a level of 200 Torr, and the reaction was conducted for 2 hours under the reduced pressure. Stirring was stopped, and nitrogen was introduced to bring the pressure to atmospheric pressure. The product was withdrawn in the form of a strand and then pelletized. Unreacted monomers were extracted with boiling water and removed. Then, the pellets were vacuum-dried. The obtained copolymer polyamide was the one containing the dimerized fatty acid component in an amount of 41% by weight.

To the above copolymer polyamide or to a conventional nylon 6/66 copolymer (66 component: 15% by weight), other components as identified in Table 1 were dry-blended, followed by melt spinning at a temperature of 230°C, and the resulting monofilament was solidified by cooling water of 8°C and then stretched under the conditions as identified in Table 1. Under the respective conditions, stretched monofilaments having a diameter of 2 mm were obtained. The transparency and the Young's modulus of each monofilament thus obtained are shown in Table 1. The Young's modulus and the wet knot strength were measured in accordance with JIS L-1013. Here, the smaller the Young's modulus, the better the flexibility. The transparency was measured by means of Optopower meter, manufactured by Haktronics Co., Ltd. Here, the larger the numerical value, the better the transparency.

In Comparative Example 2 wherein caprolactam was incorporated, feeding to the extruder became unstable in 1 or 2 hours. This is believed attributable to the fact that caprolactam was melted by the heat of the extruder and water. Further, in Comparative Example 2, fuming was substantial during the melt spinning, and caprolactam deposited on the periphery of the dies. In Example 1 wherein the copolymer polyamide of the present invention was employed, no fuming was observed.

### EXAMPLE 2

The operation was conducted in the same manner as in Example 1 except that the diameter of the monofilament was changed to 6 mm, and the stretching conditions were changed as shown in Table 1, to obtain a stretched monofilament having a diameter of 6 mm. Various physical properties are shown in Table 1.

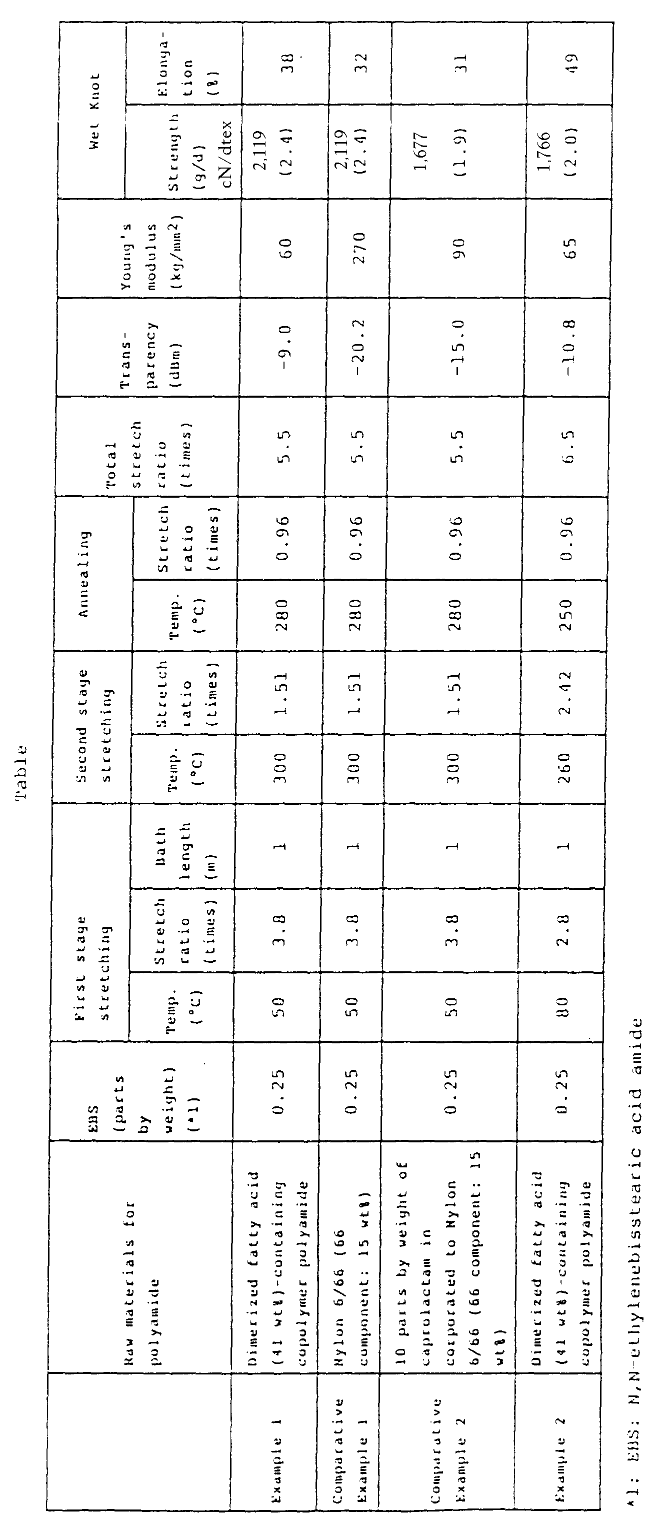

As described in the foregoing, according to the present invention, it is possible to obtain a polyamide monofilament which has good continuous moldability and which is excellent in all of the transparency, flexibility and knot strength.

## Claims

1. A stretched polyamide monofilament for fishing, which is made of a copolymer amide resin containing from 25 to 60 % by weight, based on the copolymer polyamide resin, of a dimerized fatty acid component as the copolymer component, and wherein the total stretching ratio is from 4 to 10 times.

2. The polyamide monofilament according to Claim 1, wherein the content of the dimerized fatty acid component is from 30 to 55% by weight based on the copolymer polyamide resin.

3. The polyamide monofilament according to Claim 1, wherein the diameter of the monofilament is from 1 to 10 mm.

4. The polyamide monofilament according to Claim 1, wherein the diameter of the monofilament is from 5 to 10 mm.

5. The polyamide monofilament according to Claim 1 or 2, wherein the light transmittance is at least -15 dBm as measured by means of Optopower meter.

6. The polyamide-monofilament according to Claim 1, wherein the copolymer polyamide resin is obtained by polycondensation of a prepolymer having a number average molecular weight of from 1,000 to 50,000 prepared from a dimerized fatty acid and a diamine, with a polyamide raw material other than said prepolymer component.

7. The polyamide monofilament according to Claim 6, wherein the number average molecular weight of the prepolymer is from 2,000 to 30,000.

8. The polyamide monofilament according to Claim 1 or 2, wherein the light transmittance is at least -12 dBm as measured by means of Optopower meter.

9. The polyamide monofilament according to Claim 1, which is for a line system for longline fishing.

## Patentansprüche

1. Ein gestrecktes Polyamid-Monofilament zum Fischen, welches aus einem von 25 bis 60 Gew.-%, bezogen auf das Copolymerpolyamidharz, einer dimerisierten Fettsäurekomponente als Copolymerkomponente enthaltenden Copolymeramidharz hergestellt ist und worin das Gesamtstreckverhältnis von 4 bis 10fach beträgt.

2. Das Polyamid-Monofilament gemäß Anspruch 1, worin der Gehalt an der dimerisierten Fettsäurekomponente von 30 bis 55 Gew.-%, bezogen auf das Copolymerpolyamidharz, beträgt.

3. Das Polyamid-Monofilament gemäß Anspruch 1, worin der Durchmesser des Monofilaments von 1 bis 10 mm beträgt.

4. Das Polyamid-Monofilament gemäß Anspruch 1, worin der Durchmesser des Monofilaments von 5 bis 10 mm beträgt.

5. Das Polyamid-Monofilament gemäß Anspruch 1 oder 2, worin die Lichtdurchlässigkeit mindestens -15 dBm, gemessen mit einem Optopowermeter, beträgt.

6. Das Polyamid-Monofilament gemäß Anspruch 1, worin das Copolymerpolyamidharz durch Polykondensation eines Präpolymers mit einem Zahlenmittel des Molekulargewichts von 1 000 bis 50 000, hergestellt aus einer dimerisierten Fettsäure und einem Diamin mit einer anderen als der obengenannten Präpolymerkomponente als Polyamid-Rohmaterial erhalten wird.

7. Das Polyamid-Monofilament gemäß Anspruch 6, worin das Zahlenmittel des Molekulargewichts des Präpolymers von 2 000 bis 30 000 beträgt.

8. Das Polyamid-Monofilament gemäß Anspruch 1 oder 2, worin die Lichtdurchlässigkeit mindestens -12 dBm, gemessen mit einem Optopowermeter, beträgt.

9. Das Polyamid-Monofilament gemäß Anspruch 1, welches für ein Leinensystem zum Langleinen-Fischen bestimmt ist.

## Revendications

1. Monofilament en polyamide étiré pour la pêche, qui est constitué d'une résine d'amide copolymère contenant 25 à 60 % en poids, par rapport à la résine de polyamide copolymère, d'un composant acide gras dimérisé en tant que composant du copolymère, et dans lequel le degré d'étirage total est de 4 à 10 fois.

2. Monofilament en polyamide selon la revendication 1, dont la teneur en composant acide gras dimérisé est de 30 à 55 % en poids par rapport à la résine de polyamide copolymère.

3. Monofilament en polyamide selon la revendication 1, dont le diamètre est de 1 à 10 mm.

4. Monofilament en polyamide selon la revendication 1, dont le diamètre est de 5 à 10 mm.

5. Monofilament en polyamide selon la revendication 1 ou 2, dont le facteur de transmission de la lumière est d'au moins -15 dBm, tel que mesuré au moyen d'un Optopower meter.

6. Monofilament en polyamide selon la revendication 1, dans lequel la résine de polyamide copolymère est obtenue par polycondensation d'un prépolymère ayant une masse moléculaire moyenne en nombre de 1000 à 50.000, préparé à partir d'un acide gras dimérisé et d'une diamine, avec une matière première pour polyamide autre que ledit prépolymère.

7. Monofilament en polyamide selon la revendication 6, pour lequel la masse moléculaire moyenne en nombre du prépolymère est de 2000 à 30.000.

8. Monofilament en polyamide selon la revendication 1 ou 2, dont le facteur de transmission de la lumière est d'au moins -12 dBm, tel que mesuré au moyen d'un Optopower meter.

9. Monofilament en polyamide selon la revendication 1, destiné à un système de ligne pour la pêche à l'appelet.
